# EUROPÄISCHE PATENTANMELDUNG

(11) **EP 0 596 384 A1**
(43) Veröffentlichungstag der Anmeldung: **11.05.1994**
(21) Anmeldenummer: 93117315.7
(22) Anmeldetag: 26.10.1993
(51) Int. Cl.: H02G 3/08

(54) **Gehäuse für elektrische Leitungen**

(30) Priorität: 06.11.1992 DE 9215098 U
(71) Anmelder: REHAU AG + Co, 95111 Rehau (DE)
(72) Erfinder: Strickstrock, Theo,c/o REHAU AG + Co, verstorben (DE)

(57) **Zusammenfassung**

Die Erfindung betrifft ein Gehäuse für die Montage von elektrischen Leitungen. Dieses Gehäuse besteht aus einem einseitig offenen Grundkörper mit einer Bodenplatte und Seitenwänden sowie einem die Öffnung verschließendem Deckelteil. Die Seitenwände weisen Kabeleinführungsöffnungen auf, die mit herausbrechbaren Abdeckungen verschlossen sind. Der Grundkörper ist über Befestigungselemente auf der Unterlage festlegbar. Die Erfindung wird in einem mit Öffnungen (2,3) für den Durchtritt der Befestigungselemente versehenen Befestigungsbügel (1,1') gesehen, an dem endseitig zur Grundkörperunterseite (61) hin verlaufende Stützstege (4,5) angeformt sind. Diese Stützstege (4,5) weisen in definiertem Abstand von der Unterlage rechtwinkelig zum Stützsteg (4,5) nach außen abragende und mit einem Durchbruch (41,51) versehene Flanschansätze (43,53) auf. In diese Flanschansätze (43,53) ist jeweils eine an der Grundkörperunterseite (61) angeformte Raste (610,610') mit einer die äußere Abschlußwand (42,52) des Durchbruchs (41,51) hintergreifenden Rastnase (611,611') eingesetzt.

## Beschreibung

Die Neuerung betrifft ein Gehäuse für die Montage von elektrischen Leitungen, bestehend aus einem einseitig offenen Grundkörper mit Bodenplatte und Seitenwänden und einem die Öffnung verschließenden Deckelteil, wobei die Seitenwände Kabeleinführungsöffnungen aufweisen, die mit herausbrechbaren Abdeckungen verschlossen sind und wobei der Grundkörper über Befestigungselemente auf der Unterlage festlegbar ist.

Aus dem DE-U 84 08 806 ist eine Abzweigdose für elektrische Leitungen bekannt, die aus einem kastenförmigen Gehäuse und einem Deckel besteht. In den Seitenwänden des Gehäuses sind Verformungen zur Bildung von Öffnungen zur Durchführung der elektrischen Leitungen vorgesehen. Mit dem Gehäuse einstückig verbundene Ansätze dienen der Befestigung an der Unterlage. Wenn eine solche Abzweigdose, beispielsweise wegen Mehrbedarfs an Aufnahmeraum, durch eine andere Dose mit vergrößertem Aufnahmevolumen ersetzt werden soll, müssen die Befestigungselemente der kleineren Abzweigdose gelöst und für die volumengrößere Abzweigdose neue Befestigungsbohrungen in die Unterlage eingebracht werden, in denen dann diese Abzweigdose mit entsprechenden Befestigungsmitteln auf der Unterlage festgelegt wird. Dies bedeutet neben einem erhöhten Zeitaufwand für das Montagepersonal einen Mehrverbrauch an Arbeitsmitteln wie Dübeln, Schrauben und dergleichen.

Hier setzt die Neuerung ein, die es sich zur Aufgabe gestellt hat, ein Gehäuse für die Montage von elektrischen Leitungen anzugeben, welches montagefreundlich gestaltet ist und als System eine nachträgliche Vergrößerung des Aufnahmevolumens ermöglicht, ohne daß umfangreiche weitere Montagearbeiten notwendig sind. Neuerungsgemäß wird dazu vorgeschlagen, daß ein mit Öffnungen für den Durchtritt der an der Unterseite des Gehäuses vorgesehenen Befestigungselemente versehener Befestigungsbügel verwendet wird, an dessen freien Enden zur Grundkörperunterseite hin verlaufende Stützstege angeformt sind, die ihrerseits in definiertem Abstand von der Unterlage rechtwinkelig zum Stützsteg nach außen abragende und mit einem Durchbruch versehene Flanschansätze aufweisen, in welche jeweils eine an der Grundkörperunterseite angeformte Raste mit einer die äußere Abschlußwand des Durchbruchs hintergreifenden Rastnase eingesetzt ist.

Der Befestigungsbügel kann mit seinen Stützstegen, den Flanschansätzen und den Durchbrüchen so gestaltet sein, daß die gängigen Gehäuseabmessungen aufgerastet werden können, ohne daß hierzu nochmals gebohrt und gedübelt werden müßte. Der Befestigungsbügel kann auch als Doppelbefestigungsbügel ausgeführt sein, auf dem dann beispielsweise zwei Gehäuse geringeren Aufnahmevolumens oder ein Gehäuse mit größerem Aufnahmevolumen aufgerastet sein können. Derartige Gehäuse wie Abzweigdosen und dergleichen sind in Standardgrößen von 70 mm x 70 mm, 85 mm x 85 mm, 100 mm x 100 mm oder 150 mm x 150 mm im Handel als Standardbauteile erhältlich. Die Abmessungen bei der Vewendung des Doppelbefestigungsbügels können so ausgelegt sein, daß entweder zwei Abzweigdosen der Größe 70 mm x 70 mm oder eine Abzweigdose der Größe 150 mm x 150 mm eingesetzt werden können, ohne daß bei der Umsetzung von einer Dosengröße auf die andere größere Montagearbeiten notwendig wären. Es wird lediglich die Rastverbindung der einen Dosengröße auf dem Befestigungsbügel gelöst und die Rastverbindung mit der anderen Dosengröße hergestellt.

Der eigentliche technische Vorteil der Neuerung ist darin zu sehen, daß durch die räumliche Trennung der Befestigung vom Gehäuse dem Monteur die Möglichkeit gegeben ist, im Bedarfsfall den Aufnahmeraum durch Tauschen eines Gehäuses mit geringem Aufnahmevolumen mit einem Gehäuse größeren Aufnahmevolumens zu vergrößern, ohne daß hierzu zeitraubende Montagearbeiten erforderlich wären.

Es hat sich als vorteilhaft erwiesen, daß die Stützstege der Befestigungsbügel mit ihren freien Enden jeweils in einen Wandrücksprung der Grundkörperunterseite eingreifen. Die Stützstege können dabei als Verschiebesicherung des Gehäuses auf dem Befestigungsbügel wirken.

Weiterhin erscheint es zweckmäßig, daß der Befestigungsbügel im Bereich der Öffnungen zur Unterlage hin wandverdickt ist, und daß sich der Bereich der Wandverdickung nach außen bis in die Stützstege fortsetzt. Auf diese Weise wird eine Wandverstärkung im Bereich der Öffnungen zur Unterlage hin geschaffen, über welche die erhöhten Kräfte beim Festlegen des Befestigungsbügels über die Befestigungselemente, z.B. Schrauben, an der Unterlage aufgenommen werden können.

Der definierte Abstand der Flanschansätze an den Stützstegen zur Unterlage hin soll wenigstens der Höhe der Rastnasen der im Wandrücksprung an der Grundkörperunterseite angeformten Raste ausmachen. Dadurch kann diese Raste in die Durchbrüche eingesetzt werden, ohne beim Rastvorgang mit der Unterlage in Berührung zu kommen.

Um einen festen Sitz des Gehäuses auf dem Befestigungsbügel zu erreichen, erscheint es zweckmäßig, daß die Grundkörperunterseite im Verrasterungszustand annähernd über die Länge des Befestigungsbügels auf diesem aufliegt.

Ferner sollen in den Eckbereichen von der Grundkörperunterseite nach außen ragende Abstandhalter angeformt sein, welche in ihrer Höhe dem Abstand der Flanschansätze des Befestigungsbügels von der Unterlage annähernd entsprechen. Diese Maßnahme verhindert ein Verklemmen des Gehäuses auf dem Befestigungsbügel und sichert eine einwandfreie Rastverbindung des Gehäuses auf dem Befestigungsbügel. In vorteilhafter Ausgestaltung können in einem Befestigungsbügel hintereinander angeordnet Rastmöglichkeiten für unterschiedliche Gehäusegrößen oder mehrere Befestigungsbügel in ihrer Längsebene durch abtrennbare Verbindungsbereiche einstückig miteinander verbunden sein. Die Kabeleinführungsöffnungen sind neuerungsgemäß derart ausgestaltet, daß ihre Umfangsbegrenzungen als über die Dicke der Gehäuseseitenwand verlaufender einzelner Gewindegang ausgebildet ist. Die die Kabeleinführungsöffnung verschließende Abdeckung ist dabei mit ihrem Umfangsrand über eine umlaufende Sollbruchstelle mit dem Gewindegang verbunden. Mit dieser Maßnahme lassen sich beispielsweise Kabeleinführungen in den Gehäuseseitenwandungen verschrauben, da für eine solche Verbindung der eine Gewindegang in der Gehäuseseitenwand völlig ausreichend ist.

In der Zeichnung sind Ausführungsbeispiele der Neuerung schematisch dargestellt; es zeigen:
Fig.1 die Draufsicht auf einen Befestigungsbügel in Doppelausführung
Fig.2 einen Schnitt durch den Befestigungsbügel längs der Linie A-A aus Fig.1
Fig.3 einen Schnitt durch eine auf den Befestigungsbügel aufgerastete Abzweigdose

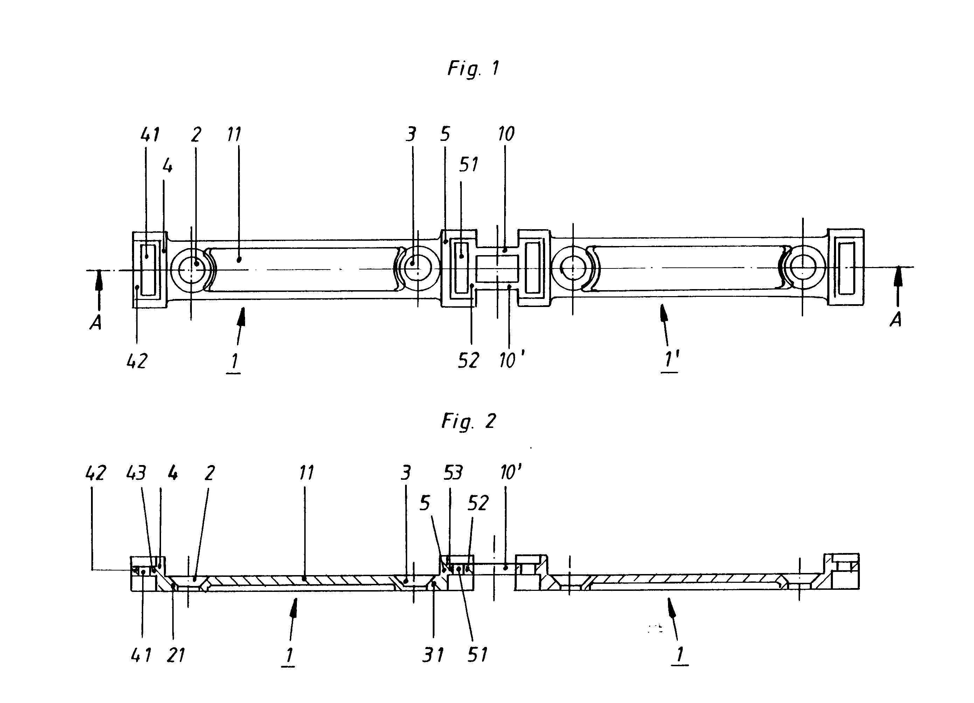

In Fig.1 sind zwei miteinander verbundene Befestigungsbügel 1, 1' dargestellt. Der Ausbau des Befestigungsbügels wird - da zwischen 1 und 1' Identität besteht - lediglich an 1 erläutert. Der Befestigungsbügel 1 zeigt das Mittelteil 11 mit den randnah angeordneten Öffnungen 2, 3 für den Durchtritt der nicht dargestellten Befestigungselemente. Die an die Öffnungen 2, 3 anschließenden Stützstege 4, 5 bilden eine U-förmige Einfassung für die Durchbrüche 41, 51, welche ihrerseits von den äußeren Abschlußwänden 42, 52 nach außen hin begrenzt sind.

Die beiden Befestigungsbügel 1, l' sind durch die abtrennbaren Verbindungsbereiche 10, 10' miteinander verbunden.

In Fig.2 ist der Schnitt durch die Befestigungsbügel 1, l' längs der Linie A-A aus Fig.1 dargestellt. Die Erklärung bezieht sich wegen der Identität der beiden Teilbereiche 1, l' wiederum nur auf den Teilbereich 1. An den Mittelteil 11 schließen sich die Öffnungen 2, 3 für den Durchtritt der Befestigungselemente an. Im Bereich dieser Öffnungen 2, 3 sind Wandverdickungen 21, 31 vorgesehen, welche sich bis in die Stützstege 4, 5 fortsetzen. Die Stützstege 4, 5 tragen die nach außen abragenden Flanschansätze 43, 53, welche mit ihrer äußeren Abschlußwand 42, 52 den jeweiligen Durchbruch 41, 51 nach außen hin abschließen. Das Mittelteil 11 des Befestigungsbügels 1 ist nach den Wandverdickungen 21, 31 um die Öffnungen 2, 3 nach oben versetzt, so daß der Befestigungsbügel 1 lediglich im Bereich der Wandverdickungen 21, 31 sowie der Stützstege 4, 5 auf der Unterlage aufliegt.

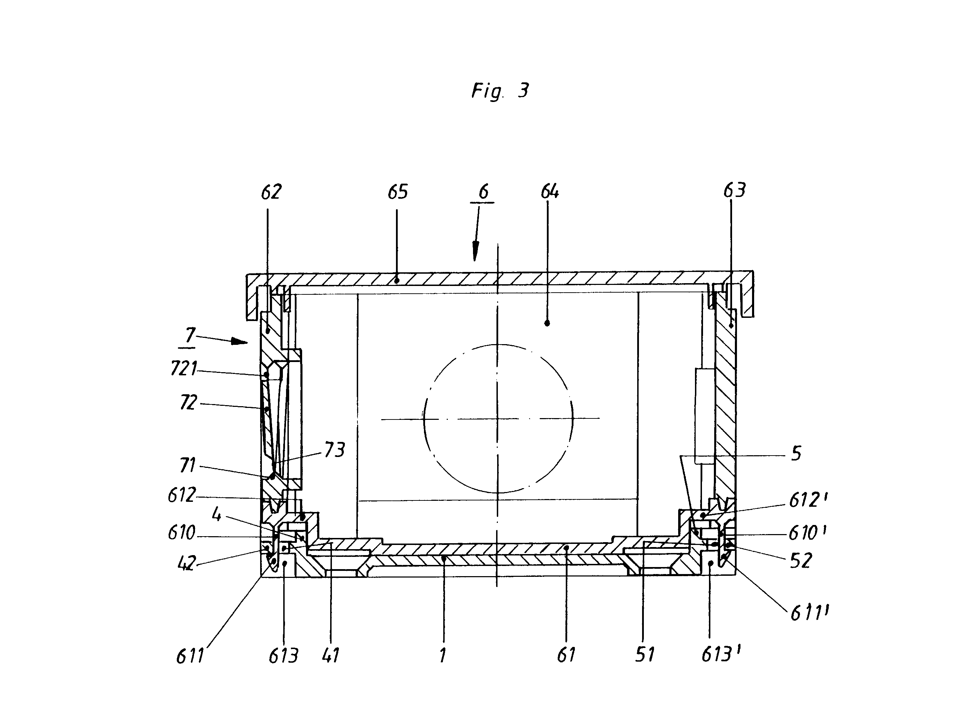

In Fig. 3 ist ein Schnitt durch eine auf den Befestigungsbügel 1 aufgerastete Abzweigdose 6 gezeigt. Die Abzweigdose 6 besteht aus der Grundkörperunterseite 61, den beiden geschnittenen Seitenwänden 62, 63 sowie der Rückwand 64. Die Abzweigdose 6 wird durch das Deckelteil 65 nach oben hin abgeschlossen. Die Seitenwände 62, 63, 64 können als Einzelelemente auf die Grundkörperunterseite 61 aufgesteckt, aufgerastet oder in ähnlicher Weise mit der Grundkörperunterseite 61 verbunden sein. Das Deckelteil 65 ist auf die freien Enden der Seitenwände 62, 63, 64 aufgesteckt, aufgerastet oder mechanisch verschraubt.

Die Seitenwände 62, 63 sind jeweils an ihren unteren freien Enden in die Raste 610, 610' verlängert. Die Rasten 610, 610' tragen an ihren freien Enden die Rastnasen 611, 611'.

In der gezeigten Darstellung hintergreifen die Rastnasen 611, 611' jeweils die äußere Abschlußwand 42, 52 und legen die Abzweigdose 6 auf dem Befestigungsbügel 1 fest.

Die freien Enden der Stützstege 4, 5 greifen in den Wandrücksprung 612, 612' der Grundkörperunterseite 61 ein und bilden dadurch eine Verschiebesicherung.

In der Seitenwand 62 ist die Kabeleinführungsöffnung 7 dargestellt, deren Umfangsbegrenzung als über die Dicke der Gehäuseseitenwand 62 verlaufender einzelner Gewindegang 71 ausgebildet ist. Die Kabeleinführungsöffnung 7 ist durch die Abdeckung 72 verschlossen, die mit ihrem Umfangsrand 721 über eine umlaufende Sollbruchstelle 73 mit dem Gewindegang 71 verbunden ist.

## Patentansprüche

1. Gehäuse für die Montage von elektrischen Leitungen, bestehend aus einem einseitig offenen Grundkörper mit Bodenplatte und Seitenwänden und einem die Öffnung verschließenden Deckelteil, wobei die Seitenwände Kabeleinführungsöffnungen aufweisen, die mit herausbrechbaren Abdeckungen verschlossen sind, und wobei der Grundkörper über Befestigungselemente auf der Unterlage festlegbar ist, gekennzeichnet durch ein mit Öffnungen (2, 3) für den Durchtritt der Befestigungselemente versehenen Befestigungsbügel (1, 1'), an dessen freien Enden zur Grundkörperunterseite (61) hin verlaufende Stützstege (4, 5) angeformt sind, die ihrerseits in definiertem Abstand von der Unterlage rechtwinkelig zum Stützsteg (4, 5) nach außen abragende und mit einem Durchbruch (41, 51) versehene Flanschansätze (43, 53) aufweisen, in welchen jeweils eine an der Grundkörperunterseite (61) angeformte Raste (610, 610') mit einer die äußere Abschlußwand (42, 52) des Durchbruchs (41, 51) hintergreifenden Rastnase (611, 611') eingesetzt ist.

2. Gehäuse nach Anspruch 1, dadurch gekennzeichnet, daß die Stützstege (4, 5) mit ihren freien Enden jeweils in einen Wandrücksprung (612, 612') an der Grundkörperunterseite (61) eingreifen.

3. Gehäuse nach Anspruch 1, dadurch gekennzeichnet, daß der Befestigungsbügel (1, 1') im Bereich der Öffnungen (2, 3) zur Unterlage hin wandverdickt ist, und daß sich der Bereich der Wandverdickung (21, 31) nach außen bis in die Stützstege (4, 5) fortsetzt.

4. Gehäuse nach Anspruch 1, dadurch gekennzeichnet, daß der definierte Abstand der Flanschansätze (43, 53) an den Stützstegen (4, 5) zur Unterlage wenigstens die Höhe der Rastnase (611, 611') der im Wandrücksprung (612, 612') an der Grundkörperunterseite (61) angeformten Raste (610, 610') ausmacht.

5. Gehäuse nach Anspruch 1, dadurch gekennzeichnet, daß die Grundkörperunterseite (61) im Verrasterungszustand annähernd über die Länge des Befestigungsbügels (1, 1') auf diesem aufliegt.

6. Gehäuse nach Anspruch 1, dadurch gekennzeichnet, daß in den Eckbereichen von der Grundkörperunterseite (61) nach außen abragende Abstandhalter (613, 613') angeformt sind, welche in ihrer Höhe den Abstand der Flanschansätze (43, 53) des Befestigungsbügels (1, 1') von der Unterlage annähernd entsprechen.

7. Gehäuse nach Anspruch 1, dadurch gekennzeichnet, daß in einem Befestigungsbügel (1) hintereinander angeordnet Rastmöglichkeiten für unterschiedliche Gehäusegrößen oder mehrere Befestigungsbügel (1, 1') in ihrer Längsebene durch abtrennbare Verbindungsbereiche (10, 10') einstückig miteinander verbunden sind.

8. Gehäuse nach Anspruch 1, dadurch gekennzeichnet, daß die Umfangsbegrenzung der Kabeleinführungsöffnung (7) als über die Dicke der Gehäuseseitenwand (62) verlaufender einzelner Gewindegang (71) ausgebildet ist.

9. Gehäuse nach Anspruch 8, dadurch gekennzeichnet, daß die die Kabeleinführungsöffnung (7) verschließende Abdeckung (72) mit ihrem Umfangsrand (721) über eine umlaufende Sollbruchstelle (73) mit dem Gewindegang (71) einstückig verbunden ist.
